# EUROPEAN PATENT SPECIFICATION

(11) **EP 4 126 595 B1**
(45) Date of publication and mention of the grant of the patent: **15.05.2024**
(21) Application number: 21717580.1
(22) Date of filing: 01.04.2021
(51) Int. Cl.: B60R 1/062, B60R 1/072, B60R 1/06

(54) **ADJUSTING INSTRUMENT FOR AN EXTERIOR VISION UNIT OF A MOTOR VEHICLE**
VERSTELLEINHEIT FÜR RÜCKSICHTSGERÄT EINES KRAFTFAHRZEUGS
DISPOSITIF DE RÉGLAGE DE RÉTROVISEUR POUR VÉHICULE AUTOMOBILE

(30) Priority: 03.04.2020 NL 2025272
(43) Date of publication of application: 08.02.2023
(73) Proprietor: MCi (Mirror Controls International) Netherlands B.V., 3447 GK Woerden (NL)
(72) Inventor: VAN STIPHOUT, Paulus Gerardus Maria, 3447 GK Woerden (NL)
(74) Representative: V.O.
(86) International application number: PCT/NL2021/050212
(87) International publication number: WO 2021/201683

(56) References cited:
- WO-A1-98/18653
- WO-A1-2010/081733
- WO-A1-2014/011037
- WO-A1-2017/126960
- JP-A- H0 911 795
- JP-A- H08 104 173
- JP-A- H08 188 086

## Description

The invention relates to an adjusting instrument for an exterior vision unit of a motor vehicle. More specifically, the invention relates to a mounting construction for mounting an adjusting instrument on a supporting frame of an exterior vision unit, such as an exterior mirror, camera and/or display of a motor vehicle.

An exterior vision unit of a motor vehicle usually comprises a base and a supporting frame, with the base comprising a foot for mounting on an outer part of the body of the motor vehicle, and a base shaft extending from the base for receiving the supporting frame pivotably around the base shaft. The supporting frame is usually pivotable about the base shaft between a park position, in which the supporting frame extends substantially along the vehicle, and a folded-out drive position, in which the supporting frame extends substantially transversely to the vehicle. Typically, the supporting frame is connected with the base shaft via an actuator, so that the pivoting movement whereby the supporting frame is folded in and folded out can be performed in a driven manner. Such an actuator is usually referred to with the term power fold actuator.

The supporting frame carries an adjusting instrument, which in turn carries an exterior vision element, for example a mirror glass included in/on a mirror support plate, a camera, a lidar sensor or an exterior vision element of a different kind. The adjusting instrument is often referred to with the term glass adjuster.

The adjusting instrument is intended to adjust the exterior vision element relative to the supporting frame, so that when the exterior vision unit is in the drive position, the angle at which a driver can view via the exterior vision element can be set. This often involves adjusting an exterior mirror about an upright and lying axis, so that the field of vision over which the driver can look rearwards can be set.

The adjusting instrument usually comprises a housing which may be built from several plastic housing parts which are pivotably connected with each other, viz., a fixing element for coupling with the supporting frame, and an adjusting element for coupling with the exterior vision element. Typically, the output part is connected with the fixing element via one or more actuators, so that the adjusting movement of the output part which carries the exterior vision element can be performed in a driven manner. In practice, such an actuator is then often referred to as a mirror glass actuator.

The housing and the supporting frame are usually mounted against each other and connected with each other through a screwed connection. This screwed connection has as a disadvantage that as a result of creep and relaxation of the plastic material of the housing, the housing cannot be fixed with respect to the supporting frame in a manner sufficiently free from play. In practice, this has as a consequence that in the course of time play may develop between the housing and the supporting frame, resulting in unwanted vibrations in the exterior vision element, for example vibrations of a mirror glass during driving.

In an already known adjusting instrument of an exterior vision unit a metal leaf spring is applied for connecting the housing and the supporting frame under a bias. A separate metal sleeve is provided which by a first end face thereof is supported on the leaf spring, and whereby a screw can be fitted, through the sleeve and the leaf spring, into the supporting frame so as, by supporting the head of the screw on a second end face of the metal sleeve, to connect the housing and the supporting frame with each other. The metal sleeve serves as spacer between the metal leaf spring and a screwhead of the screw, so that the screwhead is easy to reach for mounting and demounting of the adjusting instrument. A pretensioned metal leaf spring proves sufficiently suitable for compensating the occurring plastic's relaxation in the parts of the adjusting instrument, but has as a disadvantage that, in view of mass production, it has a cost-increasing effect and is a relatively heavy component compared to the other parts of the adjusting instrument. Moreover, a leaf spring builds up a relatively large spring force, with a relatively small extent of bending, so that the spring travel remains limited. A fastening construction for fastening an adjustment instrument for an exterior vision element is for example disclosed in document WO 2017/126960 A1.

The invention accordingly contemplates the provision of an adjusting instrument for an exterior vision unit of a motor vehicle, specifically a mounting construction for mounting an adjusting instrument on a supporting frame of an exterior vision unit, whereby, while preserving above-mentioned advantages, above-mentioned disadvantages can be avoided. In particular, the invention contemplates the provision of a cost-effective and simple-to-construct alternative for a mounting construction for an adjusting instrument of an exterior vision unit of a motor vehicle.

To this end, the invention provides an adjusting instrument for an exterior vision unit of a motor vehicle according to claim 1.

A wire spring has a comparatively low force buildup, with a large spring travel. Moreover, the wire spring can be mass produced in a simple and cost-effective manner, and it can be given a desired shape to optimize a spring characteristic of the wire spring. The wire spring, upon mounting of the housing of the adjusting instrument and the supporting frame, can be brought in a pretensioned condition whereby the wire spring in mounted condition exerts a clamping force between the housing and the supporting frame. As a result, the housing and the supporting frame are effectively pressed against each other for a proper and durable fixation, despite any relaxation in the plastic parts of the housing and/or the supporting frame. The pretensioned wire spring thus compensates creep, plastic deformation and/or relaxation in the material of the adjusting instrument, as a result of which the plastic parts remain fixed against each other in the long term. In mounting, the engagement body is carried along in the mounting direction by the fastening element, whereby a distance between the engagement body and the supporting frame is, for instance, reduced. This displacement of the engagement body is transmitted to the wire spring, in particular to a portion located between the two spaced-apart parts, as a result of which the wire spring bends. The fastening element can engage the engagement body, for instance, in a first engagement point and the supporting frame in a second engagement point. In mounted condition, a mutual distance between the first and second engagement point is, for instance, reduced with regard to an unmounted condition. It could also be possible to enlarge the mutual distance between the first and second engagement point. The wire spring is preferably configured to deform elastically upon mounting so that other parts of the housing, in particular the fixing element and the adjusting element, can be mounted to each other in undeformed condition. As a result, the fixing element and the adjusting element preserve their shape, and mutual conjunction between various components and mechanisms that may be accommodated in the housing is influenced as little as possible. The wire spring may be provided in a central portion of the housing for a uniform distribution of the pretensioning force over the housing. The fastening element preferably comprises a screw, but may also comprise other fastening means known to the skilled person, such as a glue, click or snap members, clamping means. It will further be clear that bolts, pins or otherwise rod-shaped connecting means can also be understood as a screw. The screw comprises, for example, a main shaft which, in mounted condition, extends in the mounting direction, with the screw engaging both the engagement body and the supporting frame.

For achieving an operationally reliable coupling between the engagement body and the wire spring, the engagement body can comprise a coupling element for coupling of the engagement body with the wire spring. The coupling element may be formed, for example, by a body part proceeding from the engagement body, which extends, substantially, in a direction transverse to a direction of movement of the engagement body. The coupling element may be, for example, of hook-shaped design. Also, the coupling element may be formed by a recess in an abutment side of the engagement body which abuts against the wire spring, whereby the wire spring can be received in the recess. The abutment side is, for example, an underside of the engagement body, with a downwardly directed movement of the engagement body then pushing the wire spring in downward direction and deforming it. The coupling element may be provided at a peripheral portion of the engagement body, to allow room for feeding through a screw through a central feed-through opening of the engagement body.

The housing may be mounted directly against the supporting frame, but equally so with interposition of another part. The housing may for instance comprise one or more supporting surfaces, for being supported on the supporting frame.

Optionally, the wire spring is made of spring steel. This makes the wire spring sufficiently resistant to relaxation, enabling it to exert a pretensioning force on the construction for a long time. Spring steel is normally a low-alloyed steel with nickel and a relatively high carbon content, for example 0.80-0.95% carbon, due to which, compared with other types of steel, it has a high resistance to permanent deformation. Moreover, spring steel is relatively inexpensive and simple to process to give the wire spring a desired shape.

The wire spring can extend between the two ends substantially rectilinearly. The wire spring can extend between the two ends, for example, substantially at right angles to the mounting direction. This means the wire spring, in mounted condition, extends substantially parallel to the supporting frame, so that a particularly compact construction is obtained. The dimensions of the wire spring can be adapted in a simple manner, for example a length dimension and a thickness dimension, for realizing a desired stiffness characteristic and pretensioning characteristic of the wire spring. The wire spring may then extend between the two ends along a curved path. The wire spring may, between the two ends, be imparted a desired shape, for optimizing a spring characteristic of the wire spring.

The engagement body may be coupled with the wire spring in a central portion of the wire spring between the two ends for a proportional force transmission on the housing. Moreover, the engagement body may be provided in a central portion of the housing.

Optionally, the housing comprises a central opening in which the engagement instrument is movably, for example translatably, received.

To simplify mounting, partly in view of mass production, the engagement body can comprise a feed-through opening for receiving a screw therethrough. The screw may further have an engagement point on the supporting frame to effect a connection between the housing and the supporting frame.

The engagement body may further comprise a supporting surface for supporting a screwhead of the screw. In this way, in a simple manner, a screwed connection can be effected which engages the engagement body and the supporting frame. The supporting surface may be placed at a distance from the wire spring so that the screwhead is located slightly raised, i.e. at any rate not recessed too deeply into the housing, so that the screwhead can easily be reached by, for example, a screwdriver during mounting and demounting.

The engagement body can comprise a cylindrical body part through which in axial direction the feed-through opening is provided for receiving a screw therethrough. The cylindrical body part is, for example, a tube-shaped body, such a bush or sleeve. The supporting surface for supporting the screwhead may be provided, for example, at a top of the cylindrical body part, and a coupling element for coupling the engagement body to the wire spring at a bottom of the cylindrical body part.

Optionally, the engagement body comprises a coupling element proceeding from the cylindrical body part, for coupling with the wire spring. The coupling element may be formed, for instance, by a body part proceeding from a shell of the engagement body, and which extends, substantially, in a direction transverse to a direction of movement of the engagement body. The coupling element may be, for example, of hook-shaped design, for engaging the wire spring and thereby effecting a coupling of the engagement body and the wire spring. Also, the coupling element may be formed by a recess or groove in an end face of the cylindrical body part of the engagement body. The coupling element may be provided on a peripheral portion of the engagement body, for example laterally of the cylindrical body part, to offer room to a screw that reaches through an axial feed-through opening of the engagement body.

The engagement body may be integrally formed with the housing, for a further simplification of the manufacture of the adjusting instrument. In particular, the housing and the engagement body may be made of a plastic. Creep and/or relaxation in the plastic engagement body can also be compensated by the relatively large travel that can be realized with the wire spring.

The engagement body may further be provided movably, for example translatably, within the housing, with at least one deformable connecting arm extending between the engagement body and some other part of the housing. For example, two connecting arms may be provided, such as two parallel connecting arms. The at least one connecting arm positions the engagement body at a desired location, for instance so that the feed-through opening of the engagement body is aligned with a screw opening in the supporting frame. The at least one connecting arm may be of flexible design, so that the at least one connecting arm allows a movement of the engagement body. In mounted condition, the at least one connecting arm can exert a pretensioning force on the engagement body in a same direction as the wire spring. The wire spring and the at least one connecting arm can extend in respective parallel planes, with the at least one connecting arm proceeding laterally from the engagement body. To spread pretensioning forces in the housing to some extent, the at least one connecting arm can extend at right angles to the longitudinal direction of the wire spring to lead the pretensioning force of the at least one connecting arm to another portion of the housing.

The coupling element may be formed by a part of the at least one connecting arm, for example, by a recess or groove in a portion of the at least one connecting arm near the engagement body.

In an alternative embodiment, the engagement body may be formed separately from the housing. The engagement body may then, for instance, be provided movably, in particular translatably, within a guide cavity of the housing for guiding the engagement body. Optionally, the engagement body comprises a cylindrically shaped body part, for example of metal or plastic, through which in axial direction a feed-through opening is provided for receiving a screw therethrough. The engagement body may comprise a coupling element proceeding from the shell of the cylindrical body part, for engaging the wire spring, while the coupling element is formed by a folded-out portion of the shell. The wire spring can be received in the space that is formed between the folded-out portion and a non-folded-out portion of the shell.

In a further aspect of the invention, there is provided an exterior vision unit for a vehicle, comprising a base and a supporting frame, wherein the base comprises a foot for mounting on an outer part of the body of the vehicle, and a base shaft extending from the base for receiving the supporting frame pivotably around the base shaft, and wherein the supporting frame is pivotable around the base shaft between a park position, in which the supporting frame extends substantially along the vehicle, and a folded-out drive position, in which the supporting frame extends substantially transversely to the vehicle, and wherein the supporting frame is coupled with an adjusting instrument as described in the foregoing.

The invention will be further explained on the basis of an exemplary embodiment of an adjusting instrument which is shown in drawings. In the drawings:
Fig. 1 shows an exploded perspective view of an adjusting instrument;
Fig. 2 shows an exploded perspective view of a part of an adjusting instrument;
Fig. 3 shows a perspective view of a cross section of an adjusting instrument;
Fig. 4 shows a perspective view of a cross section a part of an adjusting instrument;
Fig. 5 shows a perspective view of a cross section of an adjusting instrument;
Figs. 6A, 6B show a perspective top view of a fixing case of the adjusting instrument;
Figs. 7A, 7B, 7C show a perspective detailed view, front view, and cross section, of an engagement body.

In the figures, like or corresponding parts are designated by the same reference numerals. It is noted that the figures are merely shown by way of exemplary embodiment and should not in any way be regarded as limiting.

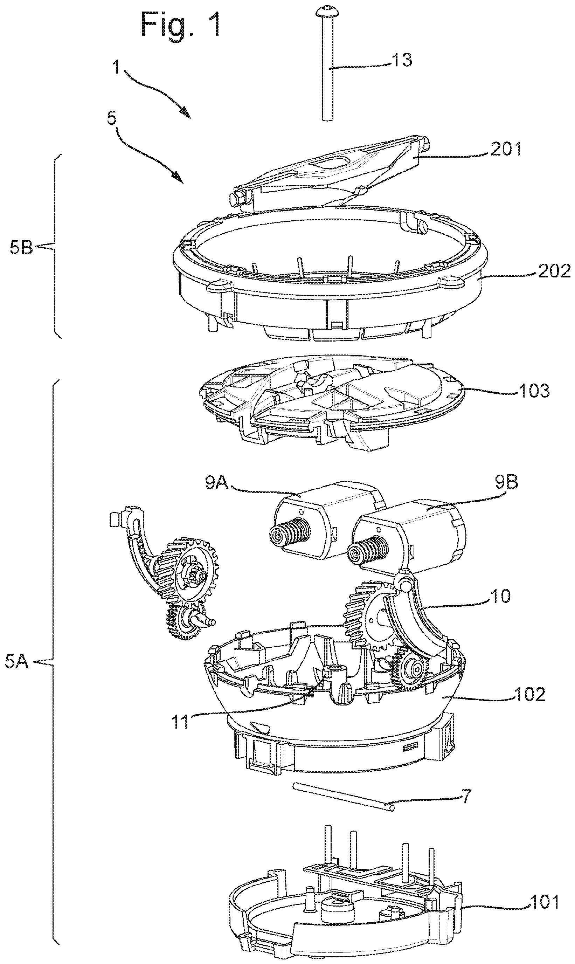

Fig. 1 shows an exploded perspective view of an adjusting instrument 1 for an exterior vision unit of a motor vehicle. The adjusting instrument 1 comprises a housing 5 having a fixing element 5A for coupling with the support frame 3, and an adjusting element 5B. The adjusting element 5B is configured to support an exterior vision element, such as a mirror, while the adjusting element 5B is pivotably connected with the fixing element 5A, to maneuver the exterior vision element into a desired orientation with respect to, for example, a driver of the motor vehicle.

In the housing 5, more specifically in the fixing element 5A, drive means are provided such as a first electric motor 9A and a second electric motor 9B for pivoting the adjusting element 5B relative to the fixing element 5A about an upright and lying axis, respectively, as well as a driveline 10 including one or more gear transmissions which connect the output shafts of the electric motors with the adjusting element 5B.

The fixing element 5A of the housing 5 is formed by a bottom plate 101, a fixing case 102, and a cover plate 103. The bottom plate 101, the fixing case 102, and the cover plate 103 are each made of plastic. The adjusting element 5B is formed by two plastic bodies 201, 202, which are movable relative to each other, and relative to the fixing element 5A.

Provided integrally with the fixing case 102 of the fixing element 5A of the housing 5 is an engagement body 11 for engaging a screw 13. The engagement body 11 and the fixing case 102 may for instance be integrally injection molded. It will also be clear that bolts, pins or otherwise rod-shaped fastening means or jointing media may be understood as a screw.

Further, a wire spring 7 is provided which is here provided between the bottom plate 101 and the fixing case 102, and which extends linearly between two opposite free ends 15A, 15B.

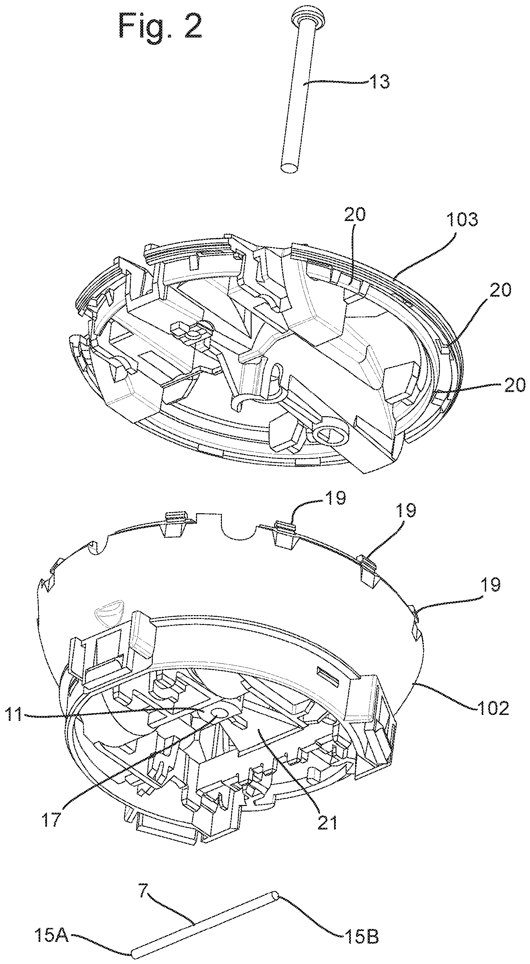

Fig. 2 shows an exploded perspective bottom view of a part of an adjusting instrument 1, depicting the fixing case 102 and the cover plate 103 of the fixing element 5A of the housing 5. The fixing case 102 comprises a feed-through opening 17 for receiving the screw 13 therethrough. In particular, the feed-through opening 17 is provided throughout the engagement body 11. The engagement body 11 is centrally positioned in the fixing case 102 of the housing 5 and is connected via a connecting arm 21 with a peripheral part of the fixing case 102. Here, a single connecting arm is shown, but also a plurality of connecting arms may be provided, for example two connecting arms, such as two parallel connecting arms. The connecting arm 21 comprises a dedicated deformation zone 22 which is configured to deform so as to facilitate a translation of the engagement body 11 relative to the rest of the housing 5.

The wire spring 7 may, in use, by way of its free ends 15A, 15B be supported on the housing 5, on respective supporting surfaces 51A, 51B of the fixing case 102 of the fixing element 5A of the housing 5. Here the supporting surfaces 51A, 51B are formed by a recess in het fixing case 102. The fixing case 102 further comprises coupling means, here snap means 19, which cooperate with complementary snap means 20 of the cover plate 103 for coupling the fixing case 102 and the cover plate 103. The cover plate 103 also comprises a feed-through opening 23 for receiving the screw 13 therethrough, with the feed-through opening 23 of the cover plate 103 and the feed-through opening 17 of the engagement body being aligned.

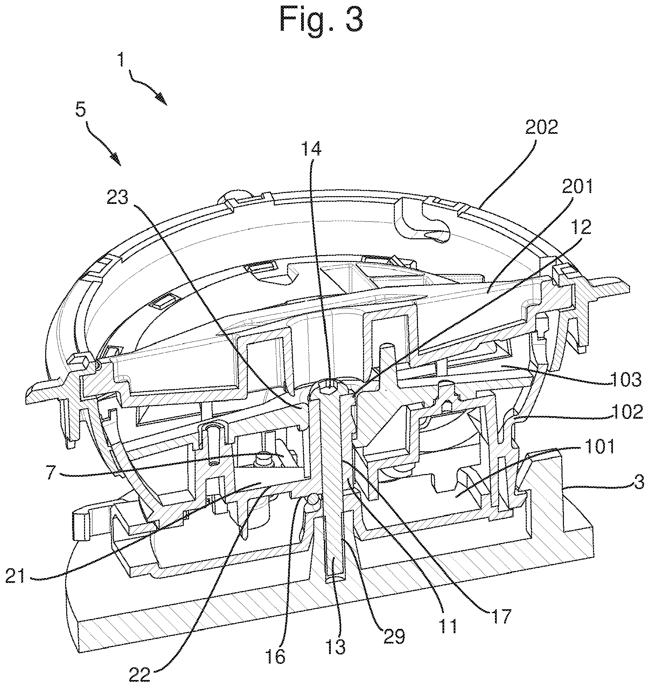

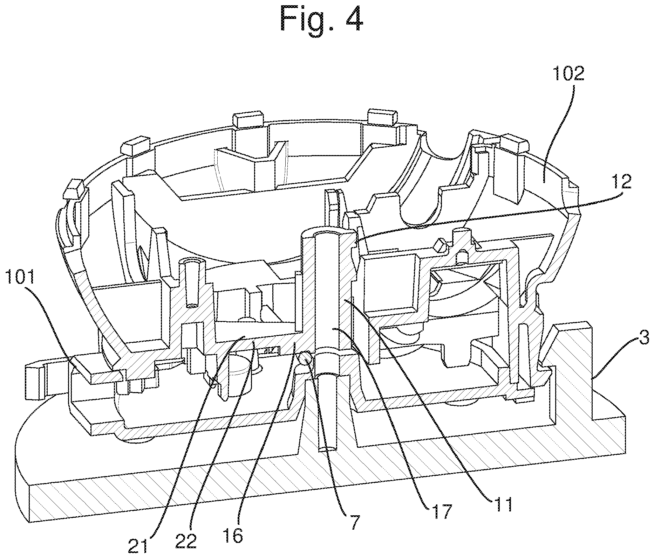

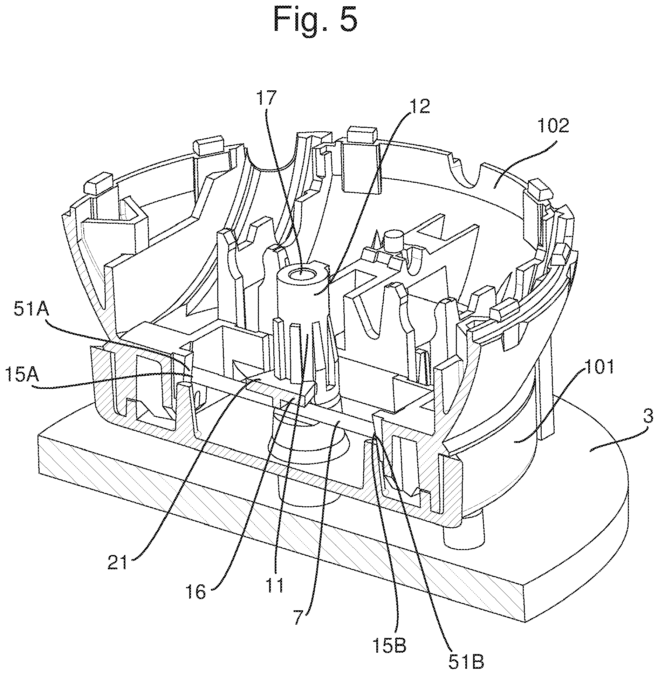

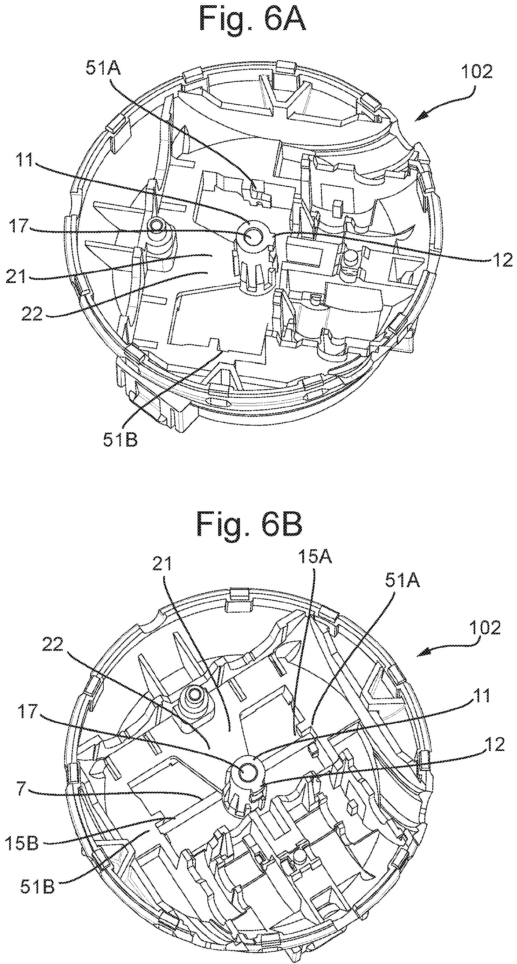

Fig. 3 shows a perspective view of a cross section of an adjusting instrument 1. Fig. 4 shows a view corresponding to that of Fig. 3 but with the adjusting element 5B of the adjusting instrument 1 and the screw 13 omitted. Fig. 5 shows a perspective view of another cross section of a part of the adjusting instrument 1. Fig. 6A and Fig. 6B show a perspective top view of the fixing case 102, with the position of the wire spring 7 in the fixing case 102 represented in Fig. 6B.

The wire spring 7 is supported by its opposite free ends 15A, 15B on the supporting surfaces 51A, 51B of the fixing case 102 of the housing 5. Further, the engagement body 11 is coupled with the wire spring 7 in a central portion of the wire spring 7 between the two ends 15A, 15B. The engagement body 11 comprises a coupling element 16 for coupling with the wire spring 7. The coupling piece may comprise, for example, a hook-shaped element which engages the wire spring so as to effect the coupling of the engagement body 11 and the wire spring 7. As can be seen in Fig. 3, the engagement body 11 is supported on the wire spring 7, so that the engagement body 11 upon tightening of the screw 13 is pressed downwards, thereby deforming the wire spring 7. By deformation of the wire spring 7, a pretensioning force (bias) is imposed, where the pretensioning force is directed substantially in the longitudinal direction of the screw 13, perpendicular to the plane in which the wire spring 7 extends.

The screw 13 engages the engagement body 11, with the screwhead 14 of the screw 13 at a top of the engagement body 11. The cover plate 103 is here coupled with the fixing case 102 only via the snap means 19, 20, but it will be clear that the screw 13 can also engage the cover plate 103. The screw 13 can for instance engage the engagement body 11 via the cover plate 103, with the screwhead 14 abutting against the cover plate 103. The screw 13 also has a point of engagement 29 on the supporting frame 3, for instance via the screw thread of the screw 13.

The engagement body 11 comprises a cylindrically shaped body part 12, where in axial direction a feed-through opening is provided for feeding-through the screw 13. In the supporting frame 3, in this case, an opening is provided in which the screw 13 can be received, and in which the screw 13 can engage the supporting frame 3. By turning of the screw 13 a distance between the engagement body 11 with the central portion of the wire spring 7 coupled thereto and the supporting frame 3 can be reduced as a result of which a deformation of the wire spring 7 occurs. Due to the ends 15A, 15B of the wire spring 7 being supported on the housing 5, in this manner a pretensioning force is exerted that clamps the housing 5 and the supporting frame 3 against each other. The engagement body 11 is coupled with the wire spring 7 in a centrally located portion of the wire spring 7, which provides for a uniform force distribution of pretensioning forces.

The cylindrical body part 12 of the engagement body 11 is elongated in axial direction, such that the screwhead 14 of the screw 13 comes to lie somewhat raised in the housing 5, so that it can be simply reached, for example with a screwdriver, during mounting and demounting of the adjusting instrument 1.

The housing parts 101, 102, 103, 201, 202 have been separately manufactured here, and may be assembled to the supporting frame 3 prior to mounting of the adjusting instrument 1. Here, the bottom plate 101, the fixing case 102 and the cover plate 103 of the fixing element 5A have for instance been coupled to each other through snap connections.

The wire spring 7 may be manufactured of a steel wire, e.g. spring steel wire, wound on a roll, whereby an end of the steel wire can be simply unwound from the roll and cut off to a desired length. Prior to or after cutting off, the end to be cut off or the cut-off end, respectively, may be bent into a desired shape, for example rectilinear, as shown in the figures. In assembling the fixing element 5A of the housing 5, the wire spring 7 is provided in the fixing case 102, such that the ends 15A, 15B are supported on the respective supporting surfaces 51A, 51B of the fixing case 102. Then, the fixing case 102 may for instance be coupled with the cover plate 103, and with the bottom plate 101, for example through snap means 19. The fixing element 5A and the adjusting element 5B may also be coupled with each other prior to mounting of the adjusting instrument 1.

The adjusting instrument 1 is here mounted on the supporting frame by means of a screw 13 here, with the housing 5 comprising a central feed-through opening for receiving therethrough the screw 13. In mounting, the adjusting instrument 1 is arranged on the supporting frame 3, with the engagement point 29 on the supporting frame 3 being aligned with the feed-through opening 17 of the engagement body 11. The engagement point 29 on the supporting frame is here formed by an opening in the supporting frame 3, in which the screw thread of the screw 13 can run true to thereby engage the supporting frame. Upon tightening of the screw 13, the screw is driven further into the opening of the supporting frame 3. This provides the advantage that the adjusting instrument 1 may be mounted on the supporting frame from above alone, that is, without the adjusting instrument 1 needing to be approached from below. To facilitate alignment of the housing 5 and the supporting frame 3, the engagement point 29 on the supporting frame 3 is here at least partly formed by a tube-shaped body which proceeds from the supporting frame 3 and which can be received in a recess in the housing 5.

The housing 5 of the adjusting instrument 1 is mounted against the supporting frame 3 by means of the screw 13, with the screw being led through the feed-through opening 17 of the engagement body 11, and engaging the supporting frame 3 in the engagement point 29. The tightening of the screw 13 ensures that the screw 13 is driven in the mounting direction, with the mounting direction being directed in the longitudinal direction of the screw 13. As a result, the screwhead 14 of the screw 13 comes to lie against a side of the engagement body 11, whereby the screwhead 14 moves the engagement body 11 along in the mounting direction upon the further tightening of the screw 13. A central portion of the wire spring 7, located between the ends 15A, 15B, is engaged by the engagement body 11, such that the tightening of the screw 13, via the engagement body 11 moving along, brings about a displacement of the central portion of the wire spring 7 in the mounting direction. Because the wire spring 7 at its free ends 15A, 15B continues to be supported on a stationary part of the housing, the wire spring deforms elastically under the influence of the tightening of the screw 13. The resistance to this deformation of the wire spring 7 results in a pretension buildup in the mounting construction, which causes adjusting instrument 1 to be clamped against the supporting frame 3. The pretension (bias) also provides for compensation of occurring creep and relaxations in the synthetic-plastic material of the housing 5, as a result of which the adjusting instrument 1 durably remains mounted, free of vibrations, against the supporting frame 3. The extent of elastic deformation of the wire spring 7, i.e. the travel of the wire spring 7, can be set by tightening the screw further or less far.

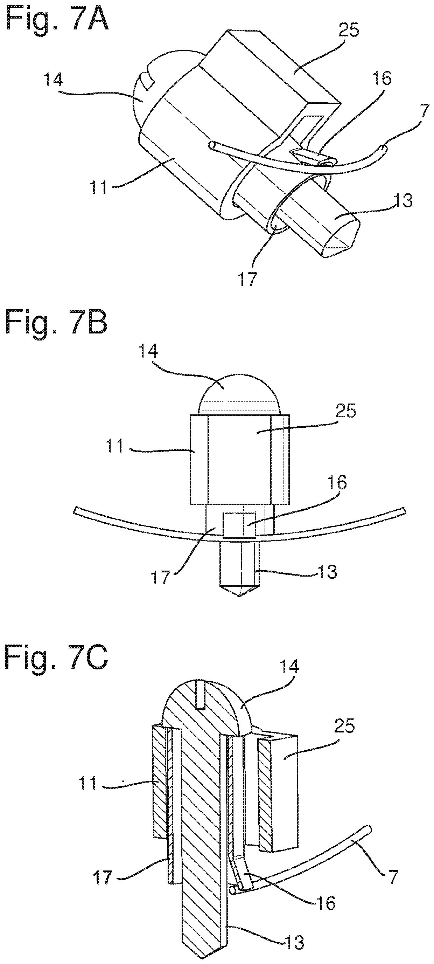

Figs. 7A, 7B, and 7C show a detailed view of an engagement body 11 which is manufactured separately from the rest of the housing 5. The engagement body 11 is implemented in metal here, but it may also be manufactured, for example, from a plastic. The engagement body 11 comprises a discrete rotation-symmetrical body part, here implemented as a cylindrical body part 12 through which in axial direction a feed-through opening 17 is provided for receiving therethrough a screw 13, while from the cylindrical body part 12 a lateral projection 25 proceeds, which extends in the axial direction along the outer surface of the cylindrical body part 12. The projection 25 tracks in a guide slot of the housing so that rotation of the engagement body 11 is hindered, while the engagement body 11 can freely translate relative to the housing 5. The engagement body 11 is coupled with the wire spring 7 by means of a coupling element 16 which is formed by a folded-out portion of a shell of the cylindrically shaped metal body part 12. The coupling element 16 is provided under the lateral projection 25.

The invention is not limited to the exemplary embodiments represented here. Many variations will be clear to a person skilled in the art and are understood to be within the scope of the invention as represented in the appended claims.

## Claims

1. Adjusting instrument for an exterior vision unit of a motor vehicle, comprising a housing (5) with a fixing element (5A) for coupling with a supporting frame (3) of the exterior vision unit and an adjusting element (5B) which is pivotably connected with the housing for adjusting an exterior vision element, wherein for the purpose of mounting the housing (5) to the supporting frame (3), there are provided
an engagement body (11) movable relative to the housing (5), for engaging thereof by a fastening element (13), in particular a screw, for connecting the engagement body (11) with the supporting frame (3), wherein the engagement body (11) can move along with the fastening element (13) in at least a mounting direction;
and a wire spring (7) which by way of two parts thereof spaced apart at an intermediate distance is supported on a housing part,
wherein the engagement body (11) engages the wire spring (7) in a portion of the wire spring between the two spaced apart parts to realize in a mounted condition an elastic deformation of the wire spring (7).

2. Adjusting instrument according to claim 1, wherein the wire spring (7) extends between the two ends (15A, 15B) substantially at right angles to the mounting direction.

3. Adjusting instrument according to claim 1 or 2, wherein the wire spring (7) is manufactured of spring steel.

4. Adjusting instrument according to any one of claims 1-3, wherein the wire spring (7) extends between the two ends (15A, 15B) substantially rectilinearly or along a curved path.

5. Adjusting instrument according to any one of the preceding claims, wherein the engagement body (11) comprises a coupling element (16) for coupling the engagement body (11) with the wire spring (7).

6. Adjusting instrument according to claim 5, wherein the coupling element (16) is formed by a body part proceeding from the engagement body (11), which body part extends in a direction, substantially, transverse to a direction of movement of the engagement body.

7. Adjusting instrument according to any one of the preceding claims, wherein the engagement body (11) comprises a feed-through opening (17) for receiving a screw (13) therethrough.

8. Adjusting instrument according to claim 7, wherein the engagement body (11) optionally comprises a supporting surface for supporting a screwhead (14) of the screw (13).

9. Adjusting instrument according to any one of claims 7-8, wherein the engagement body (11) comprises a cylindrical body part through which in axial direction the feed-through opening (17) is provided.

10. Adjusting instrument according to claim 9, wherein the engagement body (11) comprises a coupling element proceeding from a shell of the cylindrical body part, for engaging the wire spring (7).

11. Adjusting instrument according to any one of the preceding claims, wherein the engagement body (11) is integrally formed with the housing (5).

12. Adjusting instrument according to claim 11, wherein the engagement body (11) is provided movably within the housing (5), and wherein at least one deformable connecting arm (21) extends between the engagement body and another part of the housing.

13. Adjusting instrument according to any one of claims 1-12, wherein the engagement body (11) is formed separately from the housing (5).

14. Adjusting instrument according to claim 13, wherein the engagement body (11) is provided in a manner translating within a guiding cavity of the housing for guiding the engagement body.

15. Exterior vision unit for a vehicle, comprising a base and a supporting frame (3), wherein the base comprises a foot for mounting on an outer part of the body of the vehicle, and a base shaft extending from the base for receiving the supporting frame pivotably around the base shaft, and wherein the supporting frame (3) is pivotable around the base shaft between a park position, in which the supporting frame extends substantially along the vehicle, and a folded-out drive position, in which the supporting frame extends substantially transversely to the vehicle, and wherein the supporting frame is coupled with an adjusting instrument according to one or more of the preceding claims.

## Patentansprüche

1. Einstellinstrument für eine Außensichteinheit eines Kraftfahrzeugs, umfassend ein Gehäuse (5) mit einem Befestigungselement (5A) zum Koppeln mit einem Tragrahmen (3) der Außensichteinheit und ein mit dem Gehäuse schwenkbar verbundenes Einstellelement (5B) zum Einstellen eines Außensichtelements, wobei zum Zweck der Montage des Gehäuses (5) an dem Tragrahmen (3) Folgendes bereitgestellt ist
ein in Bezug zu dem Gehäuse (5) beweglicher Eingriffskörper (11) zu dessen Eingriff durch ein Befestigungselement (13), insbesondere eine Schraube, zum Verbinden des Eingriffskörpers (11) mit dem Tragrahmen (3), wobei der Eingriffskörper (11) mit dem Befestigungselement (13) zumindest in einer Montagerichtung mitbewegt werden kann;
und eine Drahtfeder (7), die mit zwei in einem Zwischenabstand zueinander angeordneten Teilen an einem Gehäuseteil abgestützt ist,
wobei der Eingriffskörper (11) mit der Drahtfeder (7) in einem Abschnitt der Drahtfeder zwischen den beiden beabstandeten Teilen in Eingriff steht, um in einem montierten Zustand eine elastische Verformung der Drahtfeder (7) zu realisieren.

2. Einstellinstrument nach Anspruch 1, wobei sich die Drahtfeder (7) zwischen den beiden Enden (15A, 15B) im Wesentlichen rechtwinklig zu der Montagerichtung erstreckt.

3. Einstellinstrument nach Anspruch 1 oder 2, wobei die Drahtfeder (7) aus Federstahl hergestellt ist.

4. Einstellinstrument nach einem der Ansprüche 1 bis 3, wobei sich die Drahtfeder (7) zwischen den beiden Enden (15A, 15B) im Wesentlichen geradlinig oder entlang einer gekrümmten Bahn erstreckt.

5. Einstellinstrument nach einem der vorstehenden Ansprüche, wobei der Eingriffskörper (11) ein Kopplungselement (16) zum Koppeln des Eingriffskörpers (11) mit der Drahtfeder (7) aufweist.

6. Einstellinstrument nach Anspruch 5, wobei das Kopplungselement (16) von einem Körperteil gebildet wird, das von dem Eingriffskörper (11) ausgeht, wobei sich das Körperteil im Wesentlichen quer zu einer Bewegungsrichtung des Eingriffskörpers erstreckt.

7. Einstellinstrument nach einem der vorstehenden Ansprüche, wobei der Eingriffskörper (11) eine Durchgangsöffnung (17) zum Aufnehmen einer Schraube (13) durch diese hindurch aufweist.

8. Einstellinstrument nach Anspruch 7, wobei der Eingriffskörper (11) optional eine Stützfläche zum Abstützen eines Schraubenkopfes (14) der Schraube (13) aufweist.

9. Einstellinstrument nach einem der Ansprüche 7 bis 8, wobei der Eingriffskörper (11) einen zylindrischen Körperteil aufweist, durch den in axialer Richtung die Durchgangsöffnung (17) bereitgestellt ist.

10. Einstellinstrument nach Anspruch 9, wobei der Eingriffskörper (11) ein von einem Mantel des zylindrischen Körperteils ausgehendes Kupplungselement zum Eingreifen der Drahtfeder (7) aufweist.

11. Einstellinstrument nach einem der vorstehenden Ansprüche, wobei der Eingriffskörper (11) einstückig mit dem Gehäuse (5) ausgebildet ist.

12. Einstellinstrument nach Anspruch 11, wobei der Eingriffskörper (11) beweglich innerhalb des Gehäuses (5) bereitgestellt ist, und wobei sich mindestens ein verformbarer Verbindungsarm (21) zwischen dem Eingriffskörper und einem anderen Teil des Gehäuses erstreckt.

13. Einstellinstrument nach einem der Ansprüche 1 bis 12, wobei der Eingriffskörper (11) getrennt von dem Gehäuse (5) ausgebildet ist.

14. Einstellinstrument nach Anspruch 13, wobei der Eingriffskörper (11) in einer Weise bereitgestellt ist, dass er sich innerhalb eines Führungshohlraums des Gehäuses verschiebt, um den Eingriffskörper zu führen.

15. Außensichteinheit für ein Fahrzeug, umfassend eine Basis und einen Tragrahmen (3), wobei die Basis einen Fuß zum Montieren an einem äußeren Teil der Fahrzeugkarosserie und eine sich von der Basis erstreckende Basiswelle zum schwenkbaren Aufnehmen des Tragrahmens um die Basiswelle aufweist, und wobei der Tragrahmen (3) um die Basiswelle zwischen einer Parkposition, in der sich der Tragrahmen im Wesentlichen entlang des Fahrzeugs erstreckt, und einer ausgeklappten Fahrposition, in der sich der Tragrahmen im Wesentlichen quer zu dem Fahrzeug erstreckt, schwenkbar ist, und wobei der Tragrahmen mit einem Einstellinstrument nach einem oder mehreren der vorstehenden Ansprüche gekoppelt ist.

## Revendications

1. Dispositif de réglage pour un rétroviseur extérieur d'un véhicule à moteur, comprenant un boîtier (5) avec un élément de fixation (5A) pour se coupler avec un bâti de support (3) du rétroviseur extérieur et un élément de réglage (5B) qui est raccordé de manière pivotante avec le boîtier pour régler un élément de vision extérieur, dans lequel afin de monter le boîtier (5) sur le bâti de support (3), on prévoit :
un corps de mise en prise (11) mobile par rapport au boîtier (5), pour sa mise en prise par un élément de fixation (13), en particulier une vis, afin de raccorder le corps de mise en prise (11) avec le bâti de support (3), dans lequel le corps de mise en prise (11) peut se déplacer conjointement avec l'élément de fixation (13) dans au moins une direction de montage ;
et un ressort métallique (7) qui, au moyen de deux de ses parties espacées à une distance intermédiaire, est supporté sur une partie de boîtier,
dans lequel le corps de mise en prise (11) met en prise le ressort métallique (7) dans une partie du ressort métallique entre les deux parties espacées afin de réaliser, dans une condition montée, une déformation élastique du ressort métallique (7).

2. Dispositif de réglage selon la revendication 1, dans lequel le ressort métallique (7) s'étend entre les deux extrémités (15A, 15B) sensiblement en angle droit par rapport à la direction de montage.

3. Dispositif de réglage selon la revendication 1 ou 2, dans lequel le ressort métallique (7) est fabriqué à partir d'acier à ressort.

4. Dispositif de réglage selon l'une quelconque des revendications 1 à 3, dans lequel le ressort métallique (7) s'étend entre les deux extrémités (15A, 15B) de manière sensiblement rectiligne ou le long d'une trajectoire courbée.

5. Dispositif de réglage selon l'une quelconque des revendications précédentes, dans lequel le corps de mise en prise (11) comprend un élément de couplage (16) pour coupler le corps de mise en prise (11) avec le ressort métallique (7).

6. Dispositif de réglage selon la revendication 5, dans lequel l'élément de couplage (16) est formé par une partie de corps provenant du corps de mise en prise (11), laquelle partie de corps s'étend dans une direction sensiblement transversale par rapport à une direction de déplacement du corps de mise en prise.

7. Dispositif de réglage selon l'une quelconque des revendications précédentes, dans lequel le corps de mise en prise (11) comprend une ouverture débouchante (17) pour y recevoir une vis (13).

8. Dispositif de réglage selon la revendication 7, dans lequel le corps de mise en prise (11) comprend facultativement une surface de support pour supporter une tête de vis (14) de la vis (13).

9. Dispositif de réglage selon l'une quelconque des revendications 7 à 8, dans lequel le corps de mise en prise (11) comprend une partie de corps cylindrique à travers laquelle, dans la direction axiale, est prévue l'ouverture débouchante (17).

10. Dispositif de réglage selon la revendication 9, dans lequel le corps de mise en prise (11) comprend un élément de couplage provenant d'une coque de la partie de corps cylindrique, pour mettre en prise le ressort métallique (7).

11. Dispositif de réglage selon l'une quelconque des revendications précédentes, dans lequel le corps de mise en prise (11) est formé, de manière solidaire avec le boîtier (5).

12. Dispositif de réglage selon la revendication 11, dans lequel le corps de mise en prise (11) est prévu, de manière mobile, à l'intérieur du boîtier (5), et dans lequel au moins un bras de raccordement déformable (21) s'étend entre le corps de mise en prise et une autre partie du boîtier.

13. Dispositif de réglage selon l'une quelconque des revendications 1 à 12, dans lequel le corps de mise en prise (11) est formé séparément du boîtier (5).

14. Dispositif de réglage selon la revendication 13, dans lequel le corps de mise en prise (11) est prévu en translation à l'intérieur d'une cavité de guidage du boîtier pour guider le corps de mise en prise.

15. Rétroviseur extérieur pour un véhicule, comprenant une base et un bâti de support (3), dans lequel la base comprend un pied permettant le montage sur une partie externe de la carrosserie du véhicule, et un arbre de base s'étendant à partir de la base pour recevoir le bâti de support de manière pivotante autour de l'arbre de base, et dans lequel le bâti de support (3) peut pivoter autour de l'arbre de base entre une position de stationnement, dans laquelle le bâti de support s'étend sensiblement le long du véhicule, et une position de conduite dépliée, dans laquelle le bâti de support s'étend de manière sensiblement transversale par rapport au véhicule, et dans lequel le bâti de support est couplé avec un dispositif de réglage selon une ou plusieurs des revendications précédentes.
